(19) Europäisches Patentamt
European Patent Office
Office européen des brevets

(11) **EP 4 549 179 A1**

(12) **EUROPEAN PATENT APPLICATION**

(43) Date of publication:
**07.05.2025 Bulletin 2025/19**

(21) Application number: **23207994.7**

(22) Date of filing: **06.11.2023**

(51) International Patent Classification (IPC):
**B60G 17/0165** (2006.01)

(52) Cooperative Patent Classification (CPC):
**B60G 17/0165;** B60G 2204/47; B60G 2300/0262;
B60G 2400/60; B60G 2400/824; B60G 2400/84;
B60G 2401/16; B60G 2500/30; B60G 2800/214

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **VOLVO TRUCK CORPORATION**
**405 08 Göteborg (SE)**

(72) Inventors:
• PETTERSSON, Emil
**449 43 NOL (SE)**
• LARSSON, Lena
**426 74 VÄSTRA FRÖLUNDA (SE)**

(74) Representative: **Kransell & Wennborg KB**
**P.O. Box 2096**
**403 12 Göteborg (SE)**

Remarks:
Amended claims in accordance with Rule 137(2)
EPC.

(54) **AUTOMATED AXLE LIFT FOR A HEAVY VEHICLE OR VEHICLE COMBINATION BASED ON LIFT AXLE CAPABILITIES**

(57)    A computer system (200) for controlling lift axles (130) of a heavy vehicle is provided, and including processing circuitry (210) configured to: obtain capability data (132) indicative of a lift axle capability for each of the lift axles, wherein the capability data is indicative of level changing rate-limitations for each of the lift axles; obtain road data (220) pertinent to a road section (222) along which the vehicle is to be driven; determine a desired lift axle configuration for the road section based on the obtained road data, and control a lowering or raising of each of the lift axles based on the obtained capability data, to achieve the desired lift axle configuration at the road section. A corresponding method, a vehicle including the device, as well as a corresponding computer program product and computer-readable storage medium are also provided.

*Fig. 2A*

## Description

## TECHNICAL FIELD

The disclosure relates generally to the field of heavy vehicles or vehicle combinations having one or more lift axles. In particular aspects, the disclosure relates to automated axle lift for such vehicles based on lift axle capabilities. The disclosure can be applied to heavy-duty vehicles, such as trucks, buses, and construction equipment, among other vehicle types. Although the disclosure may be described with respect to a particular vehicle, the disclosure is not restricted to any particular vehicle.

## BACKGROUND

Some heavy vehicles or vehicle combinations are equipped with one or more so-called lift axles, i.e. axles that may be lifted from and lowered to the ground, preferably while driving, in order to change how much of the total weight of the vehicle that is distributed among the other axles of the vehicle.

During a transport mission, the vehicle or vehicle combination (such as a tractor-trailer combination, and similar) may experience different needs with regards to how the load/weight of the vehicle is distributed among the various axles. Depending on factors such as road conditions, the current load distribution, road topography, lane/road width, speed profiles, friction between ground and tires, tire characteristics, etc., such needs may be different for different sections of a road along which the vehicle is to drive. Although the driver has the possibility to at least affect the load distribution by changing the lift axle configuration, remember when to do so and how may be a challenging task for the driver, and may for example diver the driver's attention from more critical tasks such as keeping the vehicle on the road and/or to avoid collisions. In particular, there may also be regulated axle load restrictions imposing a maximally allowed force/weight on all or some of the vehicle's axles. Failing to meet such restrictions may both cause undesirable harm to the road itself, in addition to the risk of the driver being fined for not meeting the restriction requirements. As the regulated axle load regulations are often local and may be quickly changing, this may cause additional stress for the driver.

There exists solutions which to at least some extent attempts to automate a lifting/lowering of lift axles in order to assist the driver. The present disclosure seeks to further develop such contemporary solutions and to mitigate one or more shortcomings thereof.

## SUMMARY

In order to improve on contemporary solutions for automated axle lift management, the present disclosure provides a computer system for controlling one or more lift axles of a heavy vehicle or vehicle combination, a corresponding method, a vehicle or vehicle combination including the computer system, as well as computer program products and storage media as defined by the accompanying independent claims. Various alternatives of the computer system, method, vehicle or vehicle combination, computer program product and storage media are defined by the accompanying dependent claims.

According to a first aspect of the disclosure, there is provided a computer system for controlling one or more lift axles of a heavy vehicle or vehicle combination. The computer system includes processing circuitry, and the processing circuitry is configured to: obtain capability data indicative of a lift axle capability for each of the one or more lift axles, wherein the capability data is at least indicative of level changing rate-limitations for each of the one or more lift axles; obtain road data pertinent to a road section along which the vehicle or vehicle combination is to be driven; determine a desired lift axle configuration for the road section based on the obtained road data, and control a lowering or raising of each of the one or more lift axles based on the obtained capability data, to achieve the desired lift axle configuration at the road section. The first aspect of the disclosure may seek to automate the lifting and/or lowering of lift axles in order to assist the driver and reduce e.g. driver stress. A technical benefit may include that by basing such automation on the rate capabilities of the lift axle(s), the system is better prepared to e.g. figure out when to start lowering/raising a particular lift axle in order to achieve the desired axle load configuration at the road section. This in contrast to e.g. an automated system not taking the rate capabilities into account, which may e.g. fail to sufficiently achieve the desired lift axle configuration when the road section begins if e.g. the vehicle is heavily loaded and/or in case of malfunctioning or a reduced capability of one or more of the lift axles.

Optionally, in some examples, including in at least one preferred example, of the computer system, the processing circuitry may be further configured to position data indicative of a current position of the computer system (and thereby a current position of a vehicle or vehicle combination in which the computer system is located). The position data may be used to e.g. decide which road data to obtain next, what parts of more extensive road data that is relevant for the upcoming road section, and/or to control the actual lowering or raising of the one or more lift axles. For example, in combination with e.g. data indicative of a planned route of the vehicle, the processing circuitry may use the position data to determine what the next upcoming road section is and request the correct road data therefor. Likewise, the processing circuitry may use the position data to determine e.g. when to start lower or raising one or more of the lift axles in order to obtain the desired lift axle configuration at the road section, and similar, based on the level changing rate capabilities obtained as part of the capability data.

Optionally, in some examples, including in at least one preferred example, of the computer system, the processing circuitry may be further configured to determine the desired lift axle configuration in accordance with at least one of: a desire to reduce overall tire wear; a desire to increase energy efficiency, and a desire to increase steerability of the vehicle or vehicle combination. A technical benefit may include using the obtained lift axle rate capabilities to improve the odds of achieving such goals.

Optionally, in some examples, including in at least one preferred example, of the computer system, the road data may be indicative of one or more regulated axle load restrictions at the road section, and the processing circuitry may be further configured to determine the desired lift axle configuration in accordance with such restrictions. A technical benefit may include that the use of the rate capabilities of the lift axle(s) may help to improve the odds of e.g. meeting the axle load restrictions on time, e.g. before the vehicle enters an area where the load distribution among the axles need to change. In addition, in some examples, meeting axle load restrictions may be combined with any of the above-mentioned desires, and e.g. provide an improved efficiency, improved fuel economy, reduced tire wear, improved steerability, etc., while still meeting the axle load restrictions.

Optionally, in some examples, including in at least one preferred example, of the computer system, to control the lowering or raising of each of the one or more lift axles may include using the level changing rate-limitations to determine when to start lowering or raising each of the one or more lift axles to achieve the desired lift axle configuration before or at a start of the road section. As discussed earlier herein already, a technical benefit may include a reduced risk of causing undesirable harm to the road itself, a reduced risk of being fined for not meeting (local) axle load restrictions, and similar, as the rate-aspect allows the computer system to not only calculate how, but also when, to start changing the axle load configuration in order to achieve the desired axle load configuration on time.

Optionally, in some examples, including in at least one preferred example, of the computer system, the processing circuitry may be further configured to both obtain the capability data and control the lowering or raising of each of the one or more lift axles via a same lift axle control/capability report interface. A technical benefit may include a reduced need to communicate with multiple other entities, as both control commands as well as capability data may thus be sent to/from a single entity. Additional technical benefits may include e.g. that the computer system can be made more agnostic/unaware of the particular types of lift axles used in the vehicle, as the interface may be configured to receive a same type of control commands and output a same type of capability data independent of what particular lift axle(s) the vehicle is using.

Optionally, in some examples, including in at least one preferred example, of the computer system, the processing circuitry may be further configured to control the lowering or raising of each of the one or more lift axles by sending control commands to the interface, the control commands being selected from at least one of i) a set of a desired force to be applied by/at the lift axle and a limitation of how much the lift axle should be raised or lowered, and ii) a set of a desired level to which the lift axle should be raised or lowered and a limitation of how much force that should be applied by/at the lift axle in order to do so.

Optionally, in some examples, including in at least one preferred example, of the computer system, the road data may be indicative of actual or forecasted weather conditions along the road section, and the processing circuitry may be further configured to determined the desired lift axle configuration based also on such weather conditions. The road data may e.g. include information about road and/or ambient temperature, road surface (icy, snowy, muddy, wet, dry, etc.), whether it is raining and how much, wind speed and wind direction, risk of tire slipping, split-friction coefficient situations, and similar. A technical benefit may include that the computer system may use such weather data when e.g. calculating what particular lift axle configuration to have in order to meet on or more desires/goals as mentioned earlier herein.

Optionally, in some examples, including in at least one preferred example, of the computer system, the processing circuitry may be further configured to obtain the road data by communicating with one or more sensors of the vehicle or vehicle combination. Such sensors may e.g. include sensors used to obtain weather conditions, cameras for detecting road conditions, reading signs (which may e.g. indicate local axle load restrictions, road grade, road surface issues, speed limits, etc.), and similar. A technical benefit may include that the use of more data may allow the computer system to e.g. make better predictions of one or more variables required to determine the desired lift axle configuration.

Optionally, in some examples, including in at least one preferred example, of the computer system, the processing circuitry may be further configured to obtain the road data by communicating with one or more remote sensors, one or more other vehicle or vehicle combinations having already driven along the road section, and/or with a cloud-based service. For example, a technical benefit may include that by communicating with a vehicle which has (recently) already driven along the road section, information obtained by this vehicle regarding e.g. weather conditions, road surface type, road conditions, road topology, axle load restrictions, and similar, may be used also by the vehicle or vehicle combination in which the computer system is present, thus further improving the odds of finding and using a more optimal lift axle configuration.

Optionally, in some examples, including in at least one preferred example, of the computer system, the capability data may further be at least indicative of level limitations and/or force limitations for each of the one or more lift axles, and the processing circuitry may be further configured to use such level limitations and/or force limitations as part of determining the desired lift axle configuration and/or controlling the lowering and/or raising of each of the one or more lift axles.

According to a second aspect of the disclosure, there is provided a heavy vehicle or vehicle combination. The vehicle or vehicle combination includes one or more lift axles, and a computer system for automated control of the one or more lift axles. The computer system may e.g. be the computer system described with reference to the first aspects or any example thereof. The second aspect of the disclosure may seek to provide a vehicle or vehicle combination which has the capability of assisting the driver in deciding when/how to lower or raise each of the vehicles lift axles, with the technical benefit as e.g. already described herein with reference to the computer system of the first aspect.

Optionally, in some examples, including in at least one preferred example, of the vehicle or vehicle combination, the vehicle or vehicle combination may include the lift axle control/capability report interface (e.g. "the interface").

According to a third aspect of the disclosure, the is provided a computer-implemented method for controlling one or more lift axles of a heavy vehicle or vehicle combination. The method is performed by processing circuitry of a computer system (such as the computer system of the first aspect or any examples thereof). The method includes obtaining capability data indicative of a lift axle capability for each of the one or more lift axles, wherein the capability data is at least indicative of level changing rate-limitations for each of the one or more lift axles; obtaining road data pertinent to a road section along which the vehicle or vehicle combination is to be driven; determining a desired lift axle configuration for the road section based on the obtained road data, and controlling a lowering or raising of each of the one or more lift axles based on the obtained capability data, to achieve the desired lift axle configuration at the road section. The method may seek to solve a same problem as that of the computer system, with similar technical benefits provided therefrom.

Generally herein, determining the desired lift axle configuration may of course also be based on the obtained capability data, in order to e.g. not generate a desired lift axle configuration that is currently, or soon enough, obtainable by the lift axle(s). For example, the capability data may indicate that one or more lift axles are currently malfunctioning or operating at a reduced capacity, which may affect one or both of how the lift axles are controlled and how the desired lift axle configuration is determined.

According to a fourth aspect of the present disclosure, there is provided a computer program product including program code (i.e. computer-readable instructions) for performing, when executed by processing circuitry of a computer system (such as the computer system of the first aspect or any example thereof), the method of the third aspect or any example thereof.

According to a fifth aspect of the present disclosure, there is provided a computer-readable storage medium including instructions (such as e.g. computer program code), which when executed by processing circuitry of a computer system (such as the computer system of the first aspect or any example thereof), cause the processing circuitry to perform the method of the third aspect or any example thereof. The storage medium may e.g. be non-transitory or transitory.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein various control units, code modules, and similar, associated with the above discussed technical benefits.

## BRIEF DESCRIPTION OF THE DRAWINGS

Examples are described in more detail below with reference to the appended drawings.

> **FIG. 1** schematically illustrates an exemplary heavy vehicle or vehicle combination according to the present disclosure.
> **FIGS. 2A, 2B and 2C** schematically illustrate various exemplary computer systems according to the present disclosure.
> **FIG. 3** schematically illustrates a flowchart of an exemplary method according to the present disclosure.
> **FIG. 4** schematically illustrates an exemplary computer program product and computer-readable storage medium according to the present disclosure.
> **FIG. 5** schematically illustrates an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

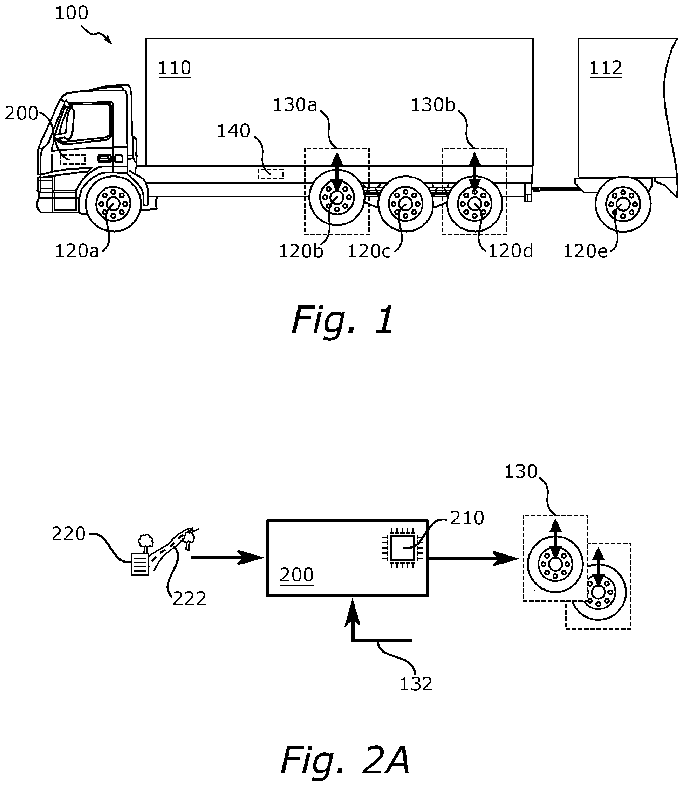

**FIG. 1** schematically illustrates an exemplary vehicle 110 or vehicle combination 100 according to an example of the present disclosure. The vehicle combination 100 includes the vehicle 110 and a trailer 112 connected to the vehicle 110. The vehicle 110 may in this combination be referred to as a towing vehicle, or similar. In other envisaged examples, the vehicle 110 may instead be a so-called tractor or tractor unit configured to e.g. tow a semitrailer (i.e. a trailer without any front axle) via a fifth wheel connection. In yet other envisaged examples, the vehicle 110 may be some other type of heavy vehicle, such as a bus, a dump truck, or any other type of heavy machinery. In some envisaged examples, the vehicle 110 may operate on its own without any trailer connected thereto. In yet other envisaged examples, the vehicle 110 may be responsible for towing more than one trailer, in which case one or more additional trailers may be connected to the trailer 112.

In this example, the vehicle 110 has four axles, including a steerable front axle 120 and three rear axles 120b, 120c and 120d. In this particular example, the middle rear axle 120c is a drive axle, while the axle 120b is a pusher axle and the axle 120d is a tag axle. Other configurations are of course also possible, e.g. with only one or two rear axles, or more than three rear axles. The trailer 112 has a front axle 120e as visible in Fig. 1, and may have one or more rear axles (not shown) depending on a desired trailer configuration. The drive axle 120c may be powered by one or more electric machines, an internal combustion engine (ICE), or similar. It is also envisaged that one or more of the axles 120b and 120d may also be configured to provide propulsion of the vehicle 110, in which case they are no longer referred to as pusher or tag axles.

In particular, the axles 120b and 120d are so-called lift axles that may be individually raised or lowered depending on a desired lift axle configuration. In Fig 1, the dashed boxes 130a and 130b are meant to include all components forming part of the machinery required to lift or lower the respective axle 120b and 120d. In what follows, when referring to a lift axle, both the actual axle (such as 120b and 120d) to which the wheels are connected or the combination of axle and other components (such as 130a and 130b) will be referred to as "lift axles", if not stated to the contrary. Such lift axles may also be referred to as for example airlift axles, retractable axles, drop axles, or similar, and may of course also be provided on the trailer 112 or any other trailer towed by the vehicle 110. The lift axles 120v and 120d may be lowered to increase a weight capacity of the vehicle 110, or to distribute the weight of e.g. a cargo carried by the vehicle 110 over more wheels, such as e.g. when crossing a bridge wherein weight is restricted or to comply with one or more other regulated axle load restrictions. Extra support behind the drive axle 120c may for example also be desirable during unloading of cargo, including e.g. (if the vehicle 110 is a dump truck) dumping of material in which case most of the cargo weight is at least temporally shifted to the back of the vehicle 110. The tag axle 120d may be lowered to take some weight of the drive axle 120c, e.g. if the vehicle 110 or vehicle combination 100 is fully loaded. Indirectly, lower or raising of the tag axle 120d may also affect the weight put on e.g. the front axle 120a. For example, lowering the tag axle 120d may shift more weight onto the front axle 120a, while raising the tax axle 120d may reduce the weight put on the front axle 120a. The pusher axle 120b may for example be lowered to add stability to a chassis of the vehicle 110 during for example cornering.

When not in use, one or both of the axles 120b and 120d may be raised, such that they either partially or fully leaves the ground on which the vehicle 110 is driving/standing. Reasons for deciding to raise one or both of the axles 120b and 120d may for example include to improve efficiency (in order to e.g. save fuel) by reducing overall friction between all wheels and the ground and thereby overall rolling resistance, to reduce overall wear of the tires of the vehicle 110, and/or to for example increase traction on the wheels remaining in contact with the ground. Lifting/raising of an axle may also help to for example reduce so-called lateral (tire) scrubbing in tight turns, thereby improving a steerability and cornering capability of the vehicle. In some situations, lifting of an axle may also be required in order for the vehicle 110 to turn at all. In summary so far, there may thus be a variety of different reasons for why to raise or lower a particle lift axle of the vehicle 110 or vehicle combination 100, and a driver of the vehicle 110 or vehicle combination 100 may face difficulty in knowing exactly how, why and when to lower or raise each lift axle.

Exactly how the lift axles as envisaged herein (such as the axles 120b and 120d) are operated may vary depending on the vehicle 110 and its configuration. The lift axles may be operated by a mechanical device, such as by a lead screw or similar equipment capable of moving a lift axle up and down. Lift axles may also, or instead, be operated pneumatically, hydraulically, hydro-pneumatically, or similar, using e.g. fluid pressurized via a compressor, control valves and fluid-driven actuators (such as air springs/bags/bellows, pistons, etc.) to cause movement and thereby raising/lowering of the lift axle. Yet other lift axles may be partly or fully electric. All lift axles of a vehicle may not necessarily operate based on a same principle, and it may in some envisaged examples be possible to combine e.g. hydraulically and pneumatically operated lift axles in a same vehicle, and similar. For the purpose of the present disclosure, the exact configuration and operating principles of each lift axle is not important, as long as each lift axle may somehow be controlled such that it is either raised or lowered upon command.

As will now be elaborated on in more detail with reference also to e.g. FIGS. 2A-2C, the envisaged vehicle 110 includes a computer system 200 configured to control the lift axles 130a and 130b (or any other lift axles, such as any lift axles provided as part of the trailer 112 or similar) in an automated way, and in particular based on (lookahead) road data and level changing rate capabilities of the lift axles 130a and 130b. Such capabilities may for example, but not necessarily, be received by the computer system 200 from an interface 140 between the computer system 200 and the respective lift axles 130a and 130b (or any other lift axles).

In what follows, and generally herein, the terms "vehicle" and "vehicle combination" may be used interchangeably if not stated to the contrary, as it is envisaged that also e.g. a trailer towed by the vehicle 110 may include one or more lift axles that is to be controlled. It is, of course, envisaged that any examples provided herein may apply only to one or more lift axles in one or more trailers, and to automatically control the lowering/raising of only these axles, if desirable.

FIG. 2A schematically illustrates an exemplary computer system 200 according to an example of the present disclosure. The computer system 200 includes processing circuitry 210 that is configured to obtain capability data 132 that is indicative of a lift axle capability for each of the one or more lift axles (here referred to using the numeral 130) of a vehicle or vehicle combination (such as 110 or 100) in which the computer system 200 is provided. The capability data at least indicates level changing rate limitations for each of the one or more lift axles 130. As used herein, "level changing rate limitations" means how fast the lift axles can be raised or lowered, and may e.g. be interpreted in units of length per time, such as e.g. millimeters per second, centimeters per second, inches per second, or similar, or by any number indicative of such length-per-time quantities. Alternatively, "level changing rate limitations" may instead indicate how quickly a certain amount of force applied by a lift axle may change with time, and may be interpreted for example in units of Newton per second, or similar. Additionally, the capability data may also be such that it indicates one or more other capabilities of each of the lift axles. Examples may include a maximum and minimum that may currently be generated by the lift axle (in units of e.g. Newton), a maximum and minimum amount of lowering/raising that may currently be achieved by the lift axle, and similar. In addition to such capability data, the computer system 200 may for example also receive information about a current status of each lift axle, such as e.g. a current force being sustained/produced by the lift axle, how much the lift axle is currently raised/lowered, and similar.

As envisaged herein, malfunctions or other reduced capabilities of a lift axle may be indicated to the computer system 200 via e.g. the level changing rate limitations. For example, a lift axle that is not working at all may indicate that it is currently capable of providing a change of zero length per time, e.g. 0 mm/s or similar. Similarly, a lift axle that is still operable but not to its designed capability, due to e.g. a partial malfunction of the lift axle, may report a finite but low value of its level changing rate limitation. Zero or lower level changing rate limitations may also be provided not only due to (partial failure), but due to e.g. a current load/weight of the vehicle 110 or vehicle combination 100 exceeding a current lifting/raising capability of the lift axle, and similar.

In some situations, the same mechanism responsible for lowering or raising a lift axle may also be used to provide suspension of the lift axle while in contact with ground. For example, the same air springs used to lower/raise a pneumatically operated lift axle may serve as suspension springs for the lift axle. In such situations, it is envisaged that capability data, including the indicated level changing rate limitations, may thus also provide capabilities of the suspension system of the vehicle as well. Additionally, the "level changing rate limitations" may be provided on a per-wheel basis or a per-vehicle side basis, based on which the corresponding per-axle capabilities may be calculated.

The processing circuitry 210 (and thereby also the computer system 200) is further configured to obtain road data 220 pertinent to a road section 222 along which the vehicle or vehicle combination is to be driven. Such road data may e.g. include topographical data, slope-/grade data, road surface condition data, data about local/national regulations in terms of e.g. maximally allowed axle weights, weather data, and similar. The processing circuitry 210 may for example have access to a planned route of the vehicle, as well as to at least an estimated current position of the vehicle. The position may e.g. be obtained using e.g. inertial navigation, a navigational satellite data receiver compatible with e.g. GPS, GLONASS, BeiDou, Galileo, etc., visual information about the surroundings obtained by one or more cameras, lidars, radars, etc., or any other data or combination of data allowing for the position of the vehicle to be estimated. One other example may include e.g. assuming that the vehicle is driving along a planned route, and simply use successive indications of vehicle speed and time in order to estimate where along the planned route the vehicle is currently located.

The processing circuitry 210 is further configured to use the obtained road data in order to determine a desired lift axle configuration for the road section along which the vehicle is to be driven next/soon. Herein, "to be driven" may also include e.g. a road section at which the vehicle is already on, if e.g. for some reason the one or more lift axles has not yet been configured as desired for the current road section.

As used herein, a "desired lift axle configuration" defines a target state for each lift axle, i.e. whether the lift axle should be lowered or raised, and possibility also how much each lift axle should be lowered or raised. For example, one example such configuration may indicate that one lift axle should be fully raised, another lift axle should be fully lowered, and/or that yet another axle should be partially lowered such that it does not assume as much weight load as it potentially could, or any such combinations of desired states for each of one or more lift axles 130. One other example such configuration may e.g. be binary, and only indicate whether an axle should be fully lowered or fully raised, and similar. How the desired lift axle configuration is found/determined may for example depend on a particular task or goal, such as to improve efficiency at the road section, to improve steerability at the road section, to reduce tire wear at the road section, and/or to follow local or national axle load restrictions at the road section, and similar. There may also be goals that are not specific for only the road section along which the vehicle is to be driven next, but that generally apply for all road sections. For example, one goal may be to always drive as efficiently (in terms of e.g. fuel and/or energy consumption) as possible, with as little tire wear as possible, as safely (or dynamically stable as possible, as agile as possible, etc., as long as one or more other and potentially conflicting goals are not determined as being more important to meet (such as goals governed by local, national or even international regulations), and similar. Consequently, what the desired lift axle configuration should be may thus be obtained based on one or more compromises among potentially conflicting goals, and the particular road section along which the vehicle is to be driven may change or introduce new such potentially conflicting goals.

As an example, a goal may be to drive as efficiently as possible, which may be achieved by for example raising one or more lift axles in order to reduce overall rolling resistance. As another example, a goal may be to reduce overall tire wear, which may be achieved also by for example raising one or more lift axles, in order to not use and thereby wear out all tires of the vehicle at once, or as e.g. a tag axle may be subject to an increased tire wear compared to other axles due to being further towards the end of the vehicle. As another example, a goal may be to improve steerability of the vehicle in e.g. tight corners and similar, which may be achieved also be for example raising one or more lift axles, in particular axles subject to lateral (tire) scrubbing (lateral skipping) and similar, and as a vehicle with e.g. more (non-steerable) axles on ground is usually more difficult to turn than a vehicle with fewer axles on ground. As another example, a goal may be to improve vehicle operation safety, such that to avoid or reduce a risk of unwanted tire slip, losing control of the steering of the vehicle on slippery surfaces, to better handle surfaces wherein friction coefficients between tires and ground are different for different wheels (so called split-mu conditions), and similar, which may in some situations be achieved by lowering one or more lift axles to increase vehicle stability, while in other situations raising of one or more lift axles may distribute more weight among the other axles and thereby increase their traction. Overall, such a safety-based goal may result in a particular desired lift axle configuration, in order to generate a desired weight distribution among the axles of the vehicle. As yet another example, a goal may be not to exceed relevant axle load restrictions, such as those found one e.g. some bridges and/or on roads which are not designed to carry as much load as e.g. highways and similar. Such a goal may e.g. be achieved by lowering one or more lift axles in order to reduce a weight load of each axle to stay within limits. As yet another example, a goal may be not to exceed physical limitations of the vehicle, such as e.g.

limitations of how much weight that can be put on a particular axle before there is a substantial risk that the axle will sooner or later fail. Such a goal related to how the vehicle and its components are designed may e.g. be achieved by lowering one or more lift axles in order to reduce a weight load of each axle or at least some axles for which there is a need to reduce the weight load in order not to exceed their physical limitations. Here, "physical limitations" may be defined by the manufacturer, and provided as one or more upper limits below which the manufacturer considers operation to be safe, or similar.

Generally, it may thus be seen that there may be multiple goals (or "desires"), and that at least some of these goals may be conflicting goals as it is not possible to both raise and lower a lift axle at a same time. How to prioritize between the goals may e.g. be hard-coded/-wired in the computer system and processing circuitry, or be provided as one or more user-configurable parameters. For example, a driver, transport planner or similar (such as an owner of the vehicle) may decide that one or more goals should (if possible) be prioritized over all other goals. In other examples, a plurality of goals may be ranked according to most prioritized to least prioritized, and the processing circuitry 210 may be configured to find the desired lift axle configuration based on such a prioritization of multiple goals in combination with the obtained road data.

For example, it is envisaged that e.g. the driver may be presented by a list of potentially conflicting goals, and that the driver may select which goal that should have the highest priority. It is also envisaged that some goals, such as those related to local or national regulations, physical limitations and/or vehicle operating safety should always have highest priority and not be de-prioritized by the driver, and similar. In some situations, it may however be possible to at least temporarily de-prioritize such a goal, such as e.g. to temporarily allow for axle loads exceeding the restricted limits in order to gain sufficient traction to start or stop on a slippery road surface, such as when starting on an icy slope or similar. It may also be such that two or more of the goals which are otherwise not possible to de-prioritize are conflicting, such as e.g. a need to exceed a maximal allowed combined load on a pair of axles (such as a boogie) in order not to exceed the physical (or manufacturer recommended) limitations of each individual axle. Also here, it may either be hardcoded/wired in the computer system 200 and processing circuitry 210 how to prioritize between such conflicting goals, or provided as one or more user-configurable variables.

The processing circuitry 210 is further configured to control a lower or raising of each of the one or more lift axles 130 based on the obtained capability data, in order to achieve the desired lift axle configuration (found e.g. by prioritizing among multiple potentially conflicting goals) at the road section 222. In particular, this is beneficial in that having access to the level changing rate limitations of the one or more lift axles 130 allows the computer system 200 and processing circuitry 210 to more effectively, and with greater certainty, reach the desired lift axle configuration at the road section 222. For example, a contemporary controller not having access to such capability data may decide to e.g. raise a particular lift axle as quickly as possible in order to be sure that the lift axle is lifted once the vehicle reaches a start of the road section. However, to raise a particular lift axle as quickly as possible may provide an increased strain on the lift axle, and also e.g. consume more energy than if e.g. raising the lift axle more slowly. By having access to and making use of the capability data, the computer system 200 and processing circuitry 210 as envisaged herein may determine that there is sufficient time to raise the lift axle more slowly while still being sure to reach the desired lift axle configuration at the start of the road section 222, and thereby provide a more efficient control of the lift axle in terms of energy consumption and component wear, and similar. In addition, having access to the capability data may also inform the computer system 200 and processing circuitry 210 about potential (partial) malfunctions or possibly exceeded or bottomed-out capabilities of the one or more lift axles 130, and the desired lift axle configuration may thus be determined accordingly such that the desired lift axle configuration is actually reachable. For example, if noticing that one lift axle 130 is operating at a reduced capacity (for some reason), it may be determined that a desired lift axle configuration not taking this reduced capacity into account may still be reached, if e.g. starting the control of the raising or lowering of the lift axle earlier in time.

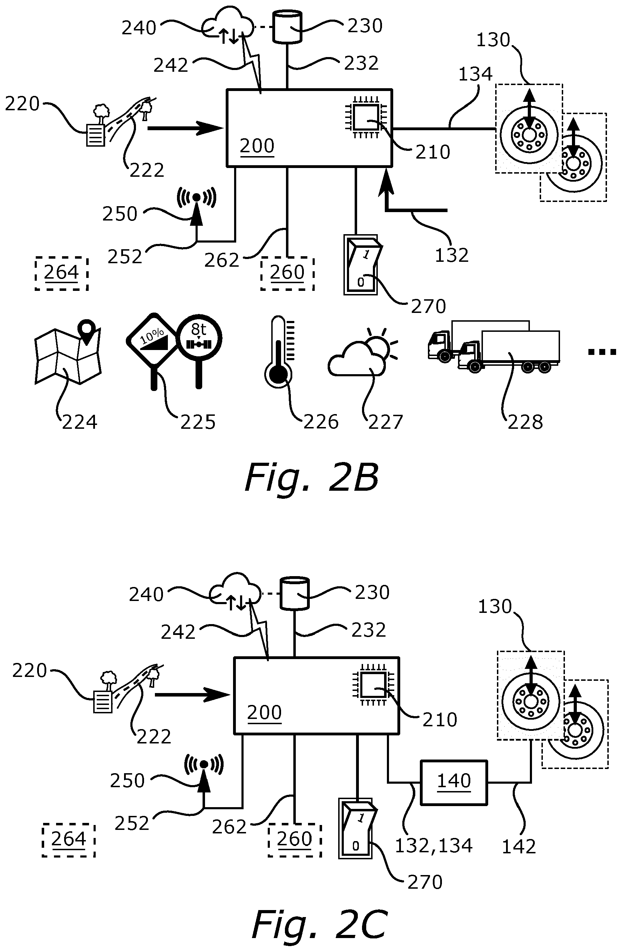

**FIG. 2B** schematically illustrates an exemplary computer system 200 according to another example of the present disclosure. The computer system 200 shown in FIG. 2B has at least the same functionality as the computer system 200 shown in FIG. 2A, but serves to illustrate further envisaged details of such a computer system.

Here, the computer system 200 is configured to communicate with e.g. a cloud-based service 240 using a wireless connection 242. The computer system 200 may also, or instead, be configured to communicate with an external storage 230 using a wired connection 232. In yet other envisaged examples, the storage 230 may form part of the computer system 200 itself, and thus be an internal storage such as a hard drive or similar. The computer system 200 may be configured to obtain the road data 220 from the cloud-based service 240 and/or from the storage 230. Wireless communication, if needed, may be performed by the computer system 200 being configured to communicate via one or more radio device 250 (such as a transceiver or at least a receiver), e.g. by sending and/or receiving data via a connection 252 to/from radio device 250. For example, the wireless communication 242 may be implemented using the radio device 250. If the storage 230 is internal to the computer device 200, or e.g. placed somewhere within the vehicle such that it is still accessible via the wired connection 232, wireless communication may not be necessary to obtain the road data 220, if the road data 220 is instead stored in the storage 230. In other envisaged examples, the storage may not be part of the computer system 200 or vehicle, but instead be accessible by wired connection 232 when the vehicle is for example parked. For example, a vehicle may be plugged in to a terminal when parked, in order to obtain data (including the road data 220) needed for a next transport mission or similar. The storage 230 may illustrate both an external and an internal storage at the same time, i.e. different storage units with which the computer system 200 may communicate. For example, the computer system 200 may include memory such as RAM or non-transient memory such as a hard drive, and the computer system 200 may use such memory to locally store received road data 220.

With "obtaining" road data 220, it is also envisaged that the vehicle and computer system 200 may be responsible for creating the road data 220 at least partially on its own, based on e.g. information received from one or more sensors. Such sensor may include one or more internal sensors 260 of the computer system 200 and/or vehicle, as well as one or more external sensors 264 with which the vehicle and computer system 200 may communicate using e.g. a wireless connection established via the radio device 250 or similar. Such sensors may for example include at least one of temperature sensors 226, humidity sensors, wind speed sensors, road surface condition sensors, cameras, radars, lidars, and similar, which may collect data pertinent to the road section along which the vehicle is to be driven next. Cameras may e.g. be external road cameras configured to capture images from which prevailing road conditions may be determined, such as whether the road is covered with snow, is wet, is muddy, and similar. Cameras may e.g. be internal cameras of the vehicle, and capable of for example capturing images of the road and surroundings in order to help establish a prevailing road condition. Such internal cameras may e.g. also, or instead, be configured to for example capture images of road signs 225, and thereby provide information (to e.g. the computer system 200) that may be used to deduce e.g. various axle load restrictions, road grades/slopes, etc., and other information normally shown to the driver using such road signs 225.

In some examples, the computer system 200 and processing circuitry 210 may be configured to receive at least part of the data needed to compile the road data from one or more other vehicles 228 that has previously driven along the road section which the vehicle is about to drive along. Such other vehicles 228 may for example have collected various data using one or more own sensors, and such data may then be transferred to the vehicle and the computer system 200 and processing circuitry 210 and used to generate (at least part of) the road data. For this purpose, if available, the radio device 250 may be used to either communicate directly with the one or more vehicles 228, or the one or more vehicles 228 may upload data to e.g. the cloud-based service 240, from which the data can then be downloaded using the wireless connection 242, or e.g. be uploaded the (external) storage 230 to which the computer system 200 has the wired connection 232 at least during some moments of time.

In some examples, the road data 220 may include weather data 227, that may either be obtained based on forecasts made by for example a weather service, from various sensor measurements performed by the vehicle and computer system 200 itself, or both. Using weather data 227 as part of the road data 220 may be beneficial in that it allows to determine things like road surface conditions, wind speed, temperature (and thereby e.g. more accurate friction estimates), and similar, which may be useful in order to e.g. prioritize between different goals and to determine the desired lift axle configuration required to meet one or more particular goals. For example, a goal of increasing or maintaining a high vehicle operating safety may require knowledge about the prevailing weather conditions at the road section. In some examples, combining or replacing forecasted weather data with weather data obtained locally at the vehicle using one or more sensors (such as sensors 260 and possible also one or more remote sensors 264) may improve the odds of accurately predicting/describing the actual weather conditions, as forecasted weather data may not always be reliability as weather is sometimes too chaotic to accurately predict using various weather models. For example, if a desired lift axle configuration determined is first based on forecasted weather data only, measurements in proximity to or even at the road section may reveal a discrepancy between the actual and forecasted weather conditions, and the desired lift axle configuration may then be updated accordingly, and/or the control of the one or more lift axles in order to reach the desired lift axle configuration may be performed differently.

Another benefit of using weather data may include one may take into account that some axle load restrictions may depend on season. For example, some roads may have axle load restrictions that become less restrictive during wintertime, due to e.g. ground frost. Knowledge about the ambient weather may thus assist in how to determine the desired lift axle configuration of the vehicle.

The road data 220 may also include map and/or topographical data 224, including e.g. data indicative of road curvature, road banking, road slope/grade, road material, location of bridges, etc. at different road sections along which the vehicle is expected to be driven. The computer system 200 may e.g. also combine such data with (an estimated) knowledge about a current position of the vehicle as described earlier herein, in order to determine e.g. how far from a particular road section of interest the vehicle is currently located, and to use e.g. an expected speed profile of the vehicle to determine when the vehicle will reach the particular road section. By combining such data with the capability data 132, the computer system 200 and processing circuitry 210 may thus calculate e.g. when control of the raising/lowering of lift axles 130 should start, how fast the raising/lowering of each lift axle 130 should be performed, and similar, with the benefits thereof as already described herein. The map and/or topographical data 224 may also include e.g. indications of one or more geographical zones in which there are regulated axle load restrictions and what the actual restrictions in these zones are, e.g. whether there is a certain maximally allowed load on each vehicle axle, a certain maximally allowed combined load on a vehicle boogie axis, or similar. In other envisaged example, such data about regulated axle load restrictions may be provided separately from the map and/or topographical data 224. As mentioned earlier herein, such information may e.g. be obtained using cameras that read road signs containing such information.

Yet another optional feature of the computer system 200 as illustrated in FIG. 2B is that the computer system 200 and processing circuitry 210 may be further configured to receive a signal from for example a switch 270, in order to indicate whether the automated raising/lowering of lift axles 130 should be enabled or not. This may for example be beneficial in situations wherein it is desirable to have as much traction as possible (such as when starting and/or stopping on a slippery road surface, possible at a grade/slope), but where e.g. this goes against one or more higher prioritized goals (such as following restrictions on axle loads and similar). A user may then (at least) temporarily disable the automated functionality provided by the computer system 200 by flicking the switch 270, and then e.g. reactivate the automated functionality once the issue (such as the need for increased traction) has been resolved. The switch 270 may be a mechanical switch, but may of course also be implemented otherwise, as e.g. a virtual switch on a touch screen as part of a user interface, as a voice-controlled switch, or similar. A same or similar touch screen, or other driver's user interface, may also be used to e.g. manually prioritize between different goals as envisaged herein.

In the example illustrated in FIG. 2B, the computer system 200 and processing circuitry 210 are configured to communicate directly with the one or more lift axles 130 (by exchanging control data/instructions) via a connection 134 (that may be wired or wireless). The capability data 132 may also, although not explicitly shown in FIG. 2B, also be obtained by the computer system 200 and processing circuitry 210 directly from the one or more lift axles 130 (e.g. via the connection 134 or via a separate, not shown, connection for such a purpose).

FIG. 2C schematically illustrates an exemplary computer system 200 according to yet another example of the present disclosure. Here, the computer system 200 is once again similar to those shown in FIGS. 2A and 2B, but with the difference that the computer system 200 and processing circuitry 210 do not communicate directly with the one or more lift axles 130 in order to obtain the capability data and control the lowering/raising of the lift axles 130. Instead, in this example, there is provided an interface 140 which may be referred to as a "lift axle control/capability report interface" or similar. The interface 140 may be standardized such that the control commands it receives, as well as the capability data it outputs, are the same independent on an exact configuration/type of the one or more lift axles 130. This may provide a technical benefit of being more flexible, in that lift axles may e.g. be added and/or replaced without having to reprogram the computer system 200, and similar, and in that the computer system 200 can be made more agnostic/unaware of how exactly the one or more lift axles 130 are configured.

For example, the interface 140 may be configured to receive one or more different control commands from the computer system 200. A first such envisaged control command may include a request for e.g. a lift axle (or wheel side of the lift axle) to apply a certain force without exceeding a particular position level (i.e. position). For example, it may be commanded that the lift axle (or wheel side) should exert a requested force $F_z^{req}$ in the z-/vertical direction without exceeding a particular z-level $z_{level}^{lim}$ (or without leaving a particular z-level interval). For example, it may thus be commanded that the lift axle should be raised/lowered at a particular speed without exceeding a particular z-level, , wherein the speed will be depending on the requested force and a current loading of the vehicle. A second such envisaged control command may include a request to reach a particular z-level $z_{level}^{req}$ without exceeding a particular force $F_z^{lim}$ in the z-direction. For example, it may thus be commanded that the lift axle should be raised/lowered as quickly as possible to the requested z-level, without exceeding the particular z-force limitation(s).

As another example, the interface 140 may be configured to provide one or more different capabilities (i.e. limitations) of each lift axle 130. A first such envisaged limitation may be a maximum rate/speed at which the lift axle 130 may currently be raised/lowered, e.g. a rate $\Delta z_{level}^{max}$ where the $\Delta$-symbol indicates "change with respect of time". A second such envisaged limitation may be a minimum rate/speed $\Delta z_{level}^{min}$ at which the lift axle 130 may currently be raised/lowered. There may of course, in some envisaged examples, be different such min- and max-limits for lowering and raising, such that the interface may provide e.g. $\Delta z_{level}^{min/max,raise}$ and

$\Delta_{level}^{min/max,lower}$. Such first and second limitations may form the level changing rate limitations envisaged herein. A third such envisaged limitation may be a minimum z-level $z_{level}^{min}$ to which the lift axle may be lowered, and a fourth such envisaged limitation may be a maximum z-level $z_{level}^{max}$ to which the lift axle may be raised. A fifth envisaged limitation may be a minimum change in force per time $\Delta F_z^{min}$ of the lift axle, and a sixth envisaged limitation may be a maximum change in force per time $\Delta F_z^{max}$. If the force rates are different for lowering and raising, the interface 140 may instead provide $\Delta F_z^{min/max,lower}$ and $\Delta F_z^{min/max,raise}$. A seventh envisaged limitation may be a minimum force $F_z^{min}$ that the lift axle may apply in the z-direction, and an eight envisaged limitation may be a maximum force $F_z^{max}$ that the lift axle may apply in the z-direction. Using one or more other such envisaged limitations other than those corresponding to the level changing rate limitations may further improve the functionality of the computer system 200, and allow to e.g. determine a more improved desired lift axle configuration that e.g. takes into account both how high/low each lift axle may currently be raised/lowered as well as how fast the lift axle may currently be lowered/raised.

In addition to control commands and capabilities, the interface 140 may optionally also be configured to output current statuses for each lift axle. For example, one such status may be a current force $F_z^{status}$ being applied in the z-axis, and another such status may be a current z-level $z_{level}^{status}$ for the lift axle.

As described earlier herein, the capabilities of each of the lift axles includes at least the various rate limits $\Delta z_{level}^{?}$ (where ? indicates e.g. "min", "max", "min,raise", "min, lower", "max,raise" and/or "max,lower". In addition to these limitations, the capability data may optionally also include one or more (such as any combination of) other limitations such as described above, and also be complemented by statuses of each lift axle as also described above.

As shown in FIG. 2C, the interface 140 may thus allow the computer system 200 and processing circuitry 210 to both send commands to, and obtain capabilities of, the one or more lift axles 130 using a same interface 140, via e.g. a single connection 132, 134.

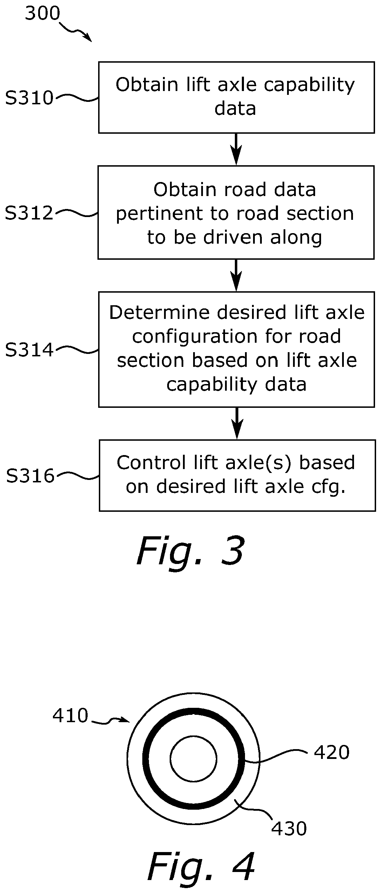

**FIG. 3** schematically illustrates a flowchart of an exemplary method 300 for controlling one or more lift axles of a heavy vehicle or vehicle combination according to an example of the present disclosure.

In an operation S310, the capability data indicative of the lift axle capability for each of the one or more lift axles is obtained. In an operation S312, the road data pertinent to the road section along which the vehicle or vehicle combination is the be driven is obtained. In an operation S314, the desired lift axle configuration for the road section is determined based on the obtained road data. In an operation S316, the lowering or raising of each of the one or more lift axles is controlled based on the obtained capability data, to achieve the determined desired lift axle configuration at the road section.

**FIG. 4** schematically illustrates an exemplary computer program 420 and computer program product 410, as well as an exemplary (non-transient) computer-readable storage medium 430, according to examples of the present disclosure. On the medium 430, a computer program 420 may be stored, which computer program 420 may cause the processing circuitry 210 of a computer system 200 as envisaged herein and thereto operatively coupled entities and devices, such as e.g. a communication interface and a storage medium, to execute method 300 according to examples described herein. The computer program 420 and/or computer program product 410 may thus provide means for performing any steps of e.g. the method 300 performed by the computer system 200 and processing circuitry 210 as disclosed herein.

In the example of Figure 4, the computer program product 410 is illustrated as an optical disc, such as a CD (compact disc) or a DVD (digital versatile disc) or a Blu-Ray disc. The computer program product 410 may also be embodied as a memory, such as a random-access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 420 is here schematically shown as a track on the depicted optical disk, the computer program 420 may be stored in any way which is suitable for the computer program product 410.

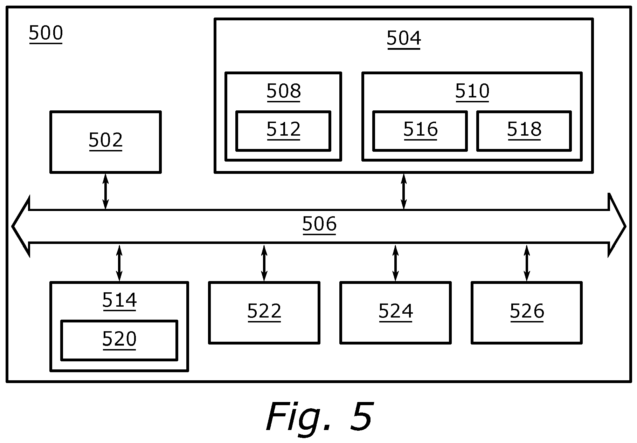

**FIG. 5** schematically illustrates an exemplary schematic diagram of a computer system 500 for implementing examples disclosed herein, such as for example the computer system 200 described with reference to FIGS. 1, 2A, 2B and 2C. The computer system 500 is adapted to execute instructions from a computer-readable medium to perform these and/or any of the functions or processing described herein. The computer system 500 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 200 may include processing circuitry 502 (e.g., processing circuitry including one or more processor devices or control units), a memory 504, and a system bus 506. The computer system 500 may include at least one computing device having the processing circuitry 502. The system bus 506 provides an interface for system components including, but not limited to, the memory 504 and the processing circuitry 502. The processing circuitry 502 may include any number of hardware components for conducting data or signal processing or for executing computer code stored in memory 504. The processing circuitry 502 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 502 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with processing circuitry 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 502 to carry out actions described herein. Thus, the computer-readable program code of the computer program 520 can comprise software instructions for implementing the functionality of the examples described herein when executed by the processing circuitry 502. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 502. The processing circuitry 502 may serve as a controller or control system for the computer system 500 that is to implement the functionality described herein.

The computer system 500 may include an input device interface 522 configured to receive input and selections to be communicated to the computer system 500 when executing instructions, such as from a keyboard, mouse, touch-sensitive surface, etc. Such input devices may be connected to the processing circuitry 502 through the input device interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The following is a non-exhaustive list of examples as envisaged herein:

Example 1: A computer system for controlling one or more lift axles of a heavy vehicle or vehicle combination, wherein the computer system comprises processing circuitry configured to: - obtain capability data indicative of a lift axle capability for each of the one or more lift axles, wherein the capability data is at least indicative of level changing rate-limitations for each of the one or more lift axles; - obtain road data pertinent to a road section along which the vehicle or vehicle combination is to be driven; - determine a desired lift axle configuration for the road section based on the obtained road data, and - control a lowering or raising of each of the one or more lift axles based on the obtained capability data, to achieve the desired lift axle configuration at the road section.

Example 2: The computer system of example 1, wherein the processing circuitry is further configured to determine the desired lift axle configuration in accordance with at least one of: - a desire to reduce overall tire wear; - a desire to increase energy efficiency, and - a desire to increase steerability of the vehicle or vehicle combination.

Example 3: The computer system of example 1 or 2, wherein the road data is indicative of one or more regulated axle load restrictions at the road section, and wherein the processing circuitry is further configured to determine the desired lift axle configuration in accordance with such restrictions.

Example 4: The computer system of any one of examples 1 to 3, wherein to control the lowering or raising of each of the one or more lift axles comprises using the level changing rate-limitations to determine when to start lowering or raising each of the one or more lift axles to achieve the desired lift axle configuration before or at a start of the road section.

Example 5: The computer system of any one of the preceding examples, wherein the processing circuitry is further configured to both obtain the capability data and control the lowering or raising of each of the one or more lift axles via a same lift axle control/capability report interface.

Example 6: The computer system of example 5, wherein the processing circuitry is further configured to control the raising or lowering of each of the one or more lift axles by sending control commands to the interface, the control commands being selected from at least one of i) a set of a desired force to be applied by/at the lift axle and a limitation of how much the lift axle should be raised or lowered, and ii) a set of a desired level to which the lift axle should be raised or lowered and a limitation of how much force that should be applied by/at the lift axle in order to do so.

Example 7: The computer system of any one of the preceding examples, wherein the road data is indicative of actual or forecasted weather conditions along the road section, and wherein the processing circuitry is further configured to determine the desired lift axle configuration based also on said weather conditions.

Example 8: The computer system of any one of the preceding examples, wherein the processing circuitry is further configured to obtain the road data by communicating with one or more sensors of the vehicle or vehicle combination.

Example 9: The computer system of any one of the preceding examples, wherein the processing circuitry is further configured to obtain the road data by communicating with one or more remote sensors, one or more other vehicle or vehicle combinations having already driven along the road section, and/or with a cloud-based service.

Example 10: The computer system of any one of the preceding examples, wherein the capability data is further at least indicative of level limitations and/or force limitations for each of the one or more lift axles, and wherein and the processing circuitry is further configured to use such level limitations and/or force limitations as part of determining the desired lift axle configuration and/or controlling the lowering and/or raising of each of the one or more lift axles.

Example 11: A heavy vehicle or vehicle combination, comprising: one or more lift axles, and a computer system according to any one of examples 1 to 10.

Example 12: The vehicle or vehicle combination of example 11, further comprising the lift axle control/-capability report interface.

Example 13: A computer-implemented method for controlling one or more lift axles of a heavy vehicle or vehicle combination, wherein the method is performed by processing circuitry of a computer system, wherein the method comprises: - obtaining capability data indicative of a lift axle capability for each of the one or more lift axles, wherein the capability data is at least indicative of level changing rate-limitations for each of the one or more lift axles; - obtaining road data pertinent to a road section along which the vehicle or vehicle combination is to be driven; - determining a desired lift axle configuration for the road section based on the obtained road data, and - controlling a lowering or raising of each of the one or more lift axles based on the obtained capability data, to achieve the desired lift axle configuration at the road section.

Example 14: A computer program product comprising program code for performing, when executed by processing circuitry of a computer system, the method of example 13.

Example 15: A non-transitory computer-readable storage medium comprising instructions, which when executed by processing circuitry of a computer system, cause the processing circuitry to perform the method of example 13.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (200) for controlling one or more lift axles (130, 130a, 130b) of a heavy vehicle (112) or vehicle combination (110), wherein the computer system comprises processing circuitry (210) configured to:

    - obtain capability data (132) indicative of a lift axle capability for each of the one or more lift axles, wherein the capability data is at least indicative of level changing rate-limitations for each of the one or more lift axles;
    - obtain road data (220) pertinent to a road section (222) along which the vehicle or vehicle combination is to be driven;
    - determine a desired lift axle configuration for the road section based on the obtained road data, and
    - control a lowering or raising of each of the one or more lift axles based on the obtained capability data, to achieve the desired lift axle configuration at the road section.

2. The computer system of claim 1, wherein the processing circuitry is further configured to determine the desired lift axle configuration in accordance with at least one of:

    - a desire to reduce overall tire wear;
    - a desire to increase energy efficiency, and
    - a desire to increase steerability of the vehicle or vehicle combination.

3. The computer system of claim 1 or 2, wherein the road data is indicative of one or more regulated axle load restrictions (225) at the road section, and wherein the processing circuitry is further configured to determine the desired lift axle configuration in accordance with such restrictions.

4. The computer system of any one of claims 1 to 3, wherein to control the lowering or raising of each of the one or more lift axles comprises using the level changing rate-limitations to determine when to start lowering or raising each of the one or more lift axles to achieve the desired lift axle configuration before or at a start of the road section.

5. The computer system of any one of the preceding claims, wherein the processing circuitry is further configured to both obtain the capability data and control the lowering or raising of each of the one or more lift axles via a same lift axle control/capability report interface (140).

6. The computer system of claim 5, wherein the processing circuitry is further configured to control the raising or lowering of each of the one or more lift axles by sending control commands to the interface, the control commands being selected from at least one of i) a set of a desired force to be applied by/at the lift axle and a limitation of how much the lift axle should be raised or lowered, and ii) a set of a desired level to which the lift axle should be raised or lowered and a limitation of how much force that should be applied by/at the lift axle in order to do so.

7. The computer system of any one of the preceding claims, wherein the road data is indicative of actual or forecasted weather conditions (224, 225) along the road section, and wherein the processing circuitry is further configured to determine the desired lift axle configuration based also on said weather conditions.

8. The computer system of any one of the preceding claims, wherein the processing circuitry is further configured to obtain the road data by communicating with one or more sensors (160) of the vehicle or vehicle combination.

9. The computer system of any one of the preceding claims, wherein the processing circuitry is further configured to obtain the road data by communicating with one or more remote sensors (262), one or more other vehicle or vehicle combinations (226) having already driven along the road section, and/or with a cloud-based service (240).

10. The computer system of any one of the preceding claims, wherein the capability data is further at least indicative of level limitations and/or force limitations for each of the one or more lift axles, and wherein and the processing circuitry is further configured to use such level limitations and/or force limitations as part of determining the desired lift axle configuration and/or controlling the lowering and/or raising of each of the one or more lift axles..

11. A heavy vehicle (112) or vehicle combination (110), comprising:

    - one or more lift axles (130, 130a, 130b), and
    - a computer system (200) according to any one of claims 1 to 10.

12. The vehicle or vehicle combination of claim 11, further comprising the lift axle control/capability report interface (140).

13. A computer-implemented method (300) for controlling one or more lift axles (130, 130a, 130b) of a heavy vehicle (112) or vehicle combination (110), wherein the method is performed by processing circuitry (210) of a computer system (200), wherein the method comprises:

    - obtaining (S310) capability data (132) indicative of a lift axle capability for each of the one or more lift axles, wherein the capability data is at least indicative of level changing rate-limitations for each of the one or more lift axles;
    - obtaining (S312) road data (220) pertinent to a road section (222) along which the vehicle or vehicle combination is to be driven;
    - determining (S314) a desired lift axle configuration for the road section based on the obtained road data, and
    - controlling (S316) a lowering or raising of each of the one or more lift axles based on the obtained capability data, to achieve the desired lift axle configuration at the road section.

14. A computer program product (410) comprising program code (420) for performing, when executed by processing circuitry (210) of a computer system (200), the method of claim 13.

15. A non-transitory computer-readable storage medium (430) comprising instructions, which when executed by processing circuitry (210) of a computer system (200), cause the processing circuitry to perform the method of claim 13.

**Amended claims in accordance with Rule 137(2) EPC.**

1. A computer system (200) for controlling one or more lift axles (130, 130a, 130b) of a heavy vehicle (112) or vehicle combination (110), wherein the computer system comprises processing circuitry (210) configured to:

    - obtain capability data (132) indicative of a lift axle capability for each of the one or more lift axles, wherein the capability data is at least indicative of level changing rate-limitations for each of the one or more lift axles;
    - obtain road data (220) pertinent to a road section (222) along which the vehicle or vehicle combination is to be driven;
    - determine a desired lift axle configuration for the road section based on the obtained road data, and
    - control a lowering or raising of each of the one or more lift axles based on the obtained capability data and the thereby indicated level changing rate-limitations for each of the one or more lift axles, to achieve the desired lift axle configuration at the road section.

2. The computer system of claim 1, wherein the processing circuitry is further configured to determine the desired lift axle configuration in accordance with at least one of:

    - a desire to reduce overall tire wear;
    - a desire to increase energy efficiency, and
    - a desire to increase steerability of the vehicle or vehicle combination.

3. The computer system of claim 1 or 2, wherein the road data is indicative of one or more regulated axle load restrictions (225) at the road section, and wherein the processing circuitry is further configured to determine the desired lift axle configuration in accordance with such restrictions.

4. The computer system of any one of claims 1 to 3, wherein to control the lowering or raising of each of the one or more lift axles comprises using the level changing rate-limitations to determine when to start lowering or raising each of the one or more lift axles to achieve the desired lift axle configuration before or at a start of the road section.

5. The computer system of any one of the preceding claims, wherein the processing circuitry is further configured to both obtain the capability data and control the lowering or raising of each of the one or more lift axles via a same lift axle control/capability report interface (140).

6. The computer system of claim 5, wherein the processing circuitry is further configured to control the raising or lowering of each of the one or more lift axles by sending control commands to the interface, the control commands being selected from at least one of i) a set of a desired force to be applied by/at the lift axle and a limitation of how much the lift axle should be raised or lowered, and ii) a set of a desired level to which the lift axle should be raised or lowered and a limitation of how much force that should be applied by/at the lift axle in order to do so.

7. The computer system of any one of the preceding claims, wherein the road data is indicative of actual or forecasted weather conditions (224, 225) along the road section, and wherein the processing circuitry is further configured to determine the desired lift axle configuration based also on said weather conditions.

8. The computer system of any one of the preceding claims, wherein the processing circuitry is further configured to obtain the road data by communicating with one or more sensors (160) of the vehicle or vehicle combination.

9. The computer system of any one of the preceding claims, wherein the processing circuitry is further configured to obtain the road data by communicating with one or more remote sensors (262), one or more other vehicle or vehicle combinations (226) having already driven along the road section, and/or with a cloud-based service (240).

10. The computer system of any one of the preceding claims, wherein the capability data is further at least indicative of level limitations and/or force limitations for each of the one or more lift axles, and wherein and the processing circuitry is further configured to use such level limitations and/or force limitations as part of determining the desired lift axle configuration and/or controlling the lowering and/or raising of each of the one or more lift axles..

11. A heavy vehicle (112) or vehicle combination (110), comprising:

    - one or more lift axles (130, 130a, 130b), and
    - a computer system (200) according to any one of claims 1 to 10.

12. The vehicle or vehicle combination of claim 11, further comprising the lift axle control/capability report interface (140).

13. A computer-implemented method (300) for controlling one or more lift axles (130, 130a, 130b) of a heavy vehicle (112) or vehicle combination (110), wherein the method is performed by processing circuitry (210) of a computer system (200), wherein the method comprises:

    - obtaining (S310) capability data (132) indicative of a lift axle capability for each of the one or more lift axles, wherein the capability data is at least indicative of level changing rate-limitations for each of the one or more lift axles;
    - obtaining (S312) road data (220) pertinent to a road section (222) along which the vehicle or vehicle combination is to be driven;
    - determining (S314) a desired lift axle configuration for the road section based on the obtained road data, and
    - controlling (S316) a lowering or raising of each of the one or more lift axles based on the obtained capability data and the thereby indicated level changing rate-limitations for each of the one or more lift axles, to achieve the desired lift axle configuration at the road section.

14. A computer program comprising instructions (420) which, when the program is executed by processing circuitry (210) of a computer system (200), cause the computer system to carry out the method of claim 13.

15. A computer-readable storage medium (430) having stored thereon the computer program of claim 14.

*Fig. 1*

*Fig. 2A*

*Fig. 2B*

*Fig. 2C*

300

S310 — Obtain lift axle capability data

S312 — Obtain road data pertinent to road section to be driven along

S314 — Determine desired lift axle configuration for road section based on lift axle capability data

S316 — Control lift axle(s) based on desired lift axle cfg.

*Fig. 3*

410

420

430

*Fig. 4*

Fig. 5

## EUROPEAN SEARCH REPORT

**Application Number**

EP 23 20 7994

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/276215 A1 (WENDLING MATTHEW [US] ET AL) 10 November 2011 (2011-11-10) | 1,3,8,9, 13-15 | INV. B60G17/0165 |
| Y | * the whole document * | 4 | |
| X | DE 10 2019 123930 A1 (SCHAEFFLER TECHNOLOGIES AG [DE]) 11 March 2021 (2021-03-11) * the whole document * | 1,2,5-7, 10-12 | |
| Y | GB 2 614 825 A (JAGUAR LAND ROVER LTD [GB]) 19 July 2023 (2023-07-19) * the whole document * | 4 | |

**TECHNICAL FIELDS SEARCHED (IPC)**

B60G

The present search report has been drawn up for all claims

| Place of search | Date of completion of the search | Examiner |
|---|---|---|
| The Hague | 20 April 2024 | Savelon, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 7994

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2024

| Patent document cited in search report | Publication date | Patent family member(s) | | Publication date |
|---|---|---|---|---|
| US 2011276215 A1 | 10-11-2011 | CA | 2739259 A1 | 05-11-2011 |
| | | CA | 2801705 A1 | 10-11-2011 |
| | | EP | 2566737 A1 | 13-03-2013 |
| | | US | 2011276215 A1 | 10-11-2011 |
| | | WO | 2011140388 A1 | 10-11-2011 |
| DE 102019123930 A1 | 11-03-2021 | NONE | | |
| GB 2614825 A | 19-07-2023 | NONE | | |

EPO FORM P0459

For more details about this annex : see Official Journal of the European Patent Office, No. 12/82